Europäisches Patentamt

European Patent Office

Office européen des brevets

(19)

(11) Veröffentlichungsnummer : **0 111 065**
**B1**

(12) **EUROPÄISCHE PATENTSCHRIFT**

(45) Veröffentlichungstag der Patentschrift : 30.07.86

(51) Int. Cl.⁴ : **F 16 H   5/74**

(21) Anmeldenummer : 83108937.0

(22) Anmeldetag : 09.09.83

(54) **Fremdkraftbetätigtes Getriebe mit Schaltsperre.**

(30) Priorität : 08.12.82 DE 3245405

(43) Veröffentlichungstag der Anmeldung : 20.06.84 Patentblatt 84/25

(45) Bekanntmachung des Hinweises auf die Patenterteilung : 30.07.86 Patentblatt 86/31

(84) Benannte Vertragsstaaten : DE FR GB IT SE

(56) Entgegenhaltungen :
EP-A- 0 003 592
DE-A- 2 733 595
DE-A- 2 811 953
DE-A- 2 842 736
DE-A- 3 032 403
DE-C- 3 032 558

(73) Patentinhaber : WABCO Westinghouse Fahrzeug-bremsen GmbH
Am Lindener Hafen 21 Postfach 91 12 80
D-3000 Hannover 91 (DE)

(72) Erfinder : **Der Erfinder hat auf seine Nennung verzichtet**

(74) Vertreter : **Schrödter, Manfred**
**WABCO Westinghouse Fahrzeugbremsen GmbH Am Lindener Hafen 21 Postfach 91 12 80**
**D-3000 Hannover 91 (DE)**

Jouve, 18, rue St-Denis, 75001 Paris, France

## Beschreibung

Die Erfindung bezieht sich auf ein fremdkraftbetätigtes Getriebe mit Schaltsperre gemäß dem Oberbegriff des Patentanspruchs 1.

Bei derartigen Getrieben werden die Gänge vom Fahrer mit dem Schalthebel vorgewählt und dann per Fremdkraft, d. h. hydraulisch oder pneumatisch, im Getriebe eingelegt. Die Kupplung kann eine vom Fahrer direkt betätigte Kupplung oder eine fremdkraftbetätigte Kupplung sein.

Ein Gangwechsel dauert etwa 0,6 bis 1,5 Sekunden. Falls nun der Fahrer vergessen sollte, beim Schalten die Kupplung zu treten, kann es zu Beschädigungen im Getriebe kommen. Schäden können auch dann auftreten, wenn die Kupplung falsch bedient wird, also z. B. zu schnell wieder eingekuppelt wird oder die Kupplung nicht voll ausgerückt wird.

Um solche Beschädigungen zu verhindern, ist es schon bekannt, den zum Schalten nötigen Druckmittelvorrat durch ein Ventil abzusperren, welches nur bei vollständig ausgerückter Kupplung geöffnet ist (DE-PS-28 42 736). Das Ventil wird dabei direkt mechanisch vom Nehmerzylinder der Kupplung verstellt bzw. geöffnet.

Denkbar ist auch ein an der Kupplung angebrachter elektrischer Kontakt, der bei völlig ausgerückter Kupplung betätigt wird und ein angeschlossenes Magnetventil aufsteuert.

Bei den bekannten Anordnungen wird ein Gangwechsel erst bei vollständig ausgerückter Kupplung eingeleitet, obwohl das Trennen der Kupplungsbeläge schon bei etwa 2/3 des Pedalweges erfolgt. Dadurch wird Zeit verloren und außerdem kann das Getriebe nach wie vor beschädigt werden, wenn die Kupplung zu früh wieder eingerückt wird.

Der Erfindung liegt die Aufgabe zugrunde, ein fremdkraftbetätigtes Getriebe der eingangs genannten Art anzugeben, welches vor Fehlbedienungen der Kupplung vollständig geschützt ist, aber gleichzeitig den Schaltvorgang sehr frühzeitig einleitet, um die Gesamtschaltzeit zu verkürzen.

Diese Aufgabe wird durch die im Patentanspruch 1 enthaltene Erfindung gelöst. Die Unteransprüche enthalten zweckmäßige Weiterbildungen der Erfindung.

Die Erfindung wird im folgenden anhand eines in einer Zeichnung dargestellten Ausführungsbeispieles näher erläutert.

Mit 1 ist ein vom Fahrer bedienbarer Ganghebel bezeichnet. Die Stellung dieses Ganghebels wird durch einen Gangsensor 2 abgetastet und einer elektronischen Auswerteschaltung 3 mitgeteilt. Diese bewirkt über eine Steuereinheit 4, welche den Gang bzw. Gassenzylinder enthält, das Einlegen des gewünschten Ganges im Getriebe 7. Eine vollzogene Gangumschaltung wird der Auswerteschaltung 3 über eine Rückmeldeeinheit 5 mitgeteilt. Diese enthält entsprechende Sensoren zum Erkennen der eingelegten Gänge.

Dem Getriebe 7 ist eine Kupplung 6 vorgeschaltet, welche über einen Hebel 10 von einem Kupplungspedal 8 oder einer (nicht dargestellten) Fremdkraftbetätigung zu bedienen ist. Die Stellung der Kupplung 6 wird mittels eines elektronischen Weggebers 9 abgetastet und der Auswerteschaltung 3 gemeldet. Derartige Wegsensoren sind für sich bekannt (DE-PS 30 32 558).

Anstelle eines Weggebers 9 können am Kupplungspedal 8 oder am Kupplungsgestänge 10, 12 auch zwei elektrische Schalter angeordnet sein, die so einstellbar sind, daß der eine etwa bei 2/3 des Kupplungsweges und der zweite beim vollen Kupplungsweg betätigt wird (nicht dargestellt).

In an sich bekannter Weise verhindert die Auswerteschaltung 3 das Einlegen eines neuen Ganges, wenn die Kupplung 6 nicht ausgerückt ist. Hierdurch wird eine mögliche Beschädigung des Getriebes 7 vermieden.

Zum Schalten wählt der Fahrer mit dem Ganghebel 1 einen Gang vor und tritt das Kupplungspedal 8. Die Kupplung 6 wird dadurch ausgerückt. Sobald ein Kupplungsweg von 2/3 des vollen Weges erreicht ist, bewirkt die Auswerteschaltung 3 das Herausnehmen des alten Ganges und zunächst das Aufsuchen der Gasse des neuen Ganges. Sobald der Kupplungsweg erreicht ist, bei dem die Kupplung voll ausgerückt ist, bewirkt die Auswerteschaltung 3 das vollständige Einlegen des neuen Ganges.

Das Herausnehmen eines alten Ganges und das Aufsuchen der Gasse eines neuen Ganges im Bereich von etwa 2/3 Hub bis zum vollen Hub der Kupplung erfolgt aber nur dann, wenn die Auswerteschaltung 3 eine Betätigungsgeschwindigkeit in Richtung voller Hub der Kupplung feststellt. Hierzu wird die Geschwindigkeit des Weggebers 9 ausgewertet.

Falls die Kupplung derart fehlbedient wird, daß sie vor Abschluß eines Gangwechsels bereits wieder eingerückt wird, bewirkt die Auswerteschaltung 3 bei etwa 2/3 des Kupplungsweges eine Rückschaltung in die Neutralstellung. Hierdurch wird eine Beschädigung des Getriebes 7 vermieden.

Bei Rücknahme der Kupplung aus der voll ausgerückten Stellung vor Abschluß der Gangumschaltung bewirkt die Auswerteschaltung 3 eine Schnellschaltung, d. h. eine Schaltung mit erhöhter Fremdkraft.

Falls ein Gang ohne Betätigung der Kupplung 6 angewählt wird, wird eine optische oder akustische Warneinrichtung 11 betätigt. Hierdurch wird der Fahrer dazu aufgefordert, die Kupplung zu betätigen. Daraufhin wird der vorgewählte Gang sofort eingelegt und die Warneinrichtung wieder abgeschaltet.

Um die Gangumschaltung noch weiter zu beschleunigen, kann an der Auswerteschaltung 3 schon bei einem Betätigungsweg von weniger als der Hälfte des Gesamtweges der Kupplung ein Signal durch den Weggeber 9 abgegeben werden. Daraufhin steuert die Auswerteschaltung bereits die Gasse des neu ausgewählten Ganges an.

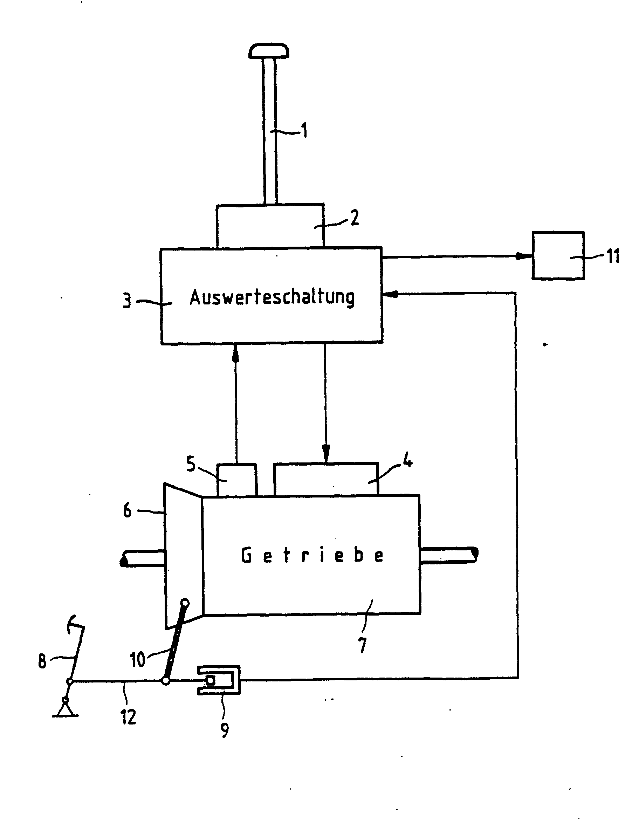

**Patentansprüche**

1. Fremdkraftbetätigtes Getriebe mit einer Schaltsperre, insbesondere für Kraftfahrzeuge, welche das Getriebe so steuert, daß ein Gangwechsel nur bei ausgerückter Kupplung möglich ist, gekennzeichnet durch folgende Merkmale:

a) es ist ein elektrischer Geber (9) zum Erfassen des Kupplungsweges an der Kupplung (6, 10), am Kupplungspedal (8) oder an einem Kupplungsübertragungselement (12) angeordnet;

b) der Geber (9) ist mit einer elektronischen Auswerteschaltung (3) verbunden, welche die Auswahl und das Einlegen der Gänge steuert;

c) die Auswerteschaltung (3) verhindert das Einlegen eines neuen Ganges, wenn die Kupplung (6) nicht ausgerückt ist;

d) die Auswerteschaltung (3) bewirkt, daß abhängig von Kupplungswegen, die kleiner sind als der Kupplungsgesamtweg, und/oder von Kupplungsbetätigungsgeschwindigkeiten Teilfunktionen der Gangumschaltung ausgeführt werden;

e) die Auswerteschaltung (3) bewirkt das vollständige Einlegen eines neuen Ganges bei völlig ausgerückter Kupplung.

2. Getriebe nach Anspruch 1, dadurch gekennzeichnet, daß die Auswerteschaltung (3) das Herausnehmen eines alten Ganges und das Aufsuchen der Gasse eines neuen Ganges bei einem vom Geber (9) erfaßten vorbestimmten Kupplungsweg von etwa 2/3 des vollen Ausrückweges bewirkt.

3. Getriebe nach Anspruch 2, dadurch gekennzeichnet, daß das Herausnehmen eines alten Ganges und das Aufsuchen der Gasse eines neuen Ganges im Bereich von etwa 2/3 bis vollem Hub der Kupplung nur dann erfolgt, wenn die Auswerteschaltung (3) eine Betätigungsgeschwindigkeit in Richtung voller Hub feststellt.

4. Getriebe nach Anspruch 1 bis 3, dadurch gekennzeichnet, daß als Geber (9) zwei Schaltelemente vorgesehen sind, die bei etwa 2/3 und beim vollen Kupplungsweg betätigt werden.

5. Getriebe nach Anspruch 1 bis 3, dadurch gekennzeichnet, daß als Geber (9) ein Wegsensor (9) vorgesehen ist.

6. Getriebe nach einem oder mehreren der Ansprüche 1 bis 5, dadurch gekennzeichnet, daß die Auswerteschaltung (3) bei Rücknahme des Kupplungspedals (8) aus der voll getretenen Stellung vor Abschluß der Gangumschaltung eine Schnellschaltung bewirkt.

7. Getriebe nach einem oder mehreren der Ansprüche 1 bis 6, dadurch gekennzeichnet, daß die Auswerteschaltung (3) bei etwa 2/3 des Kupplungsweges eine Rückschaltung des Getriebes in die Neutralstellung dann bewirkt, wenn die Kupplung (6) vor Abschluß des Gangwechsels wieder eingerückt wird.

8. Getriebe nach einem oder mehreren der Ansprüche 1 bis 7, dadurch gekennzeichnet, daß bei einer Gangwahl ohne gleichzeitige Betätigung der Kupplung (6) die Auswerteschaltung (3) eine optische oder akustische Warneinrichtung (11) betätigt.

9. Getriebe nach Anspruch 8, dadurch gekennzeichnet, daß die Auswerteschaltung (3) bei einer anschließenden Kupplungsbetätigung den vorgewählten Gang sofort einlegt und die Warneinrichtung (11) abschaltet.

10. Getriebe nach einem oder mehreren der Ansprüche 1 bis 9, dadurch gekennzeichnet, daß an die Auswerteschaltung (3) ein Signal nach einem Betätigungsweg von weniger als der Hälfte des Gesamtweges der Kupplung abgegeben wird und die Auswerteschaltung (3) daraufhin bereits die Gasse des neu angewählten Ganges ansteuert.

**Claims**

1. Power-operated transmission, especially for motor vehicles, having a shift lock which controls the transmission in such a manner that a change of gear is possible only when the clutch is disengaged, characterised by the following features:

a) an electric transmitter (9) for detecting the displacement of the clutch is arranged on the clutch (6, 10), on the clutch pedal (8) or on a clutch transmission element (12);

b) the transmitter (9) is connected to an electronic evaluation circuit (3) which controls the selection and the engagement of the gears;

c) the evaluation circuit (3) prevents a new gear being engaged if the clutch (6) is not disengaged;

d) the evaluation circuit (3) causes partial gear-changing operations to be carried out in dependence on clutch displacements that are smaller than the total clutch displacement, and/or on clutch actuation speeds;

e) the evaluation circuit (3) effects complete engagement of a new gear when the clutch is fully disengaged.

2. Transmission according to claim 1, characterised in that the evaluation circuit (3) causes an old gear to be disengaged and the slot for a new gear to be located when a predetermined clutch displacement of approximately 2/3 of the total disengagement movement is detected by the transmitter (9).

3. Transmission according to claim 2, characterised in that the disengagement of an old gear and the location of the slot for a new gear in the region of from approximately 2/3 to the complete stroke of the clutch takes place only if the evaluation circuit (3) detects an actuation speed towards the completion of the stroke.

4. Transmission according to claims 1 to 3, characterised in that there are provided as the transmitter (9) two switch elements which are actuated at approximately 2/3 of the clutch displacement and at the total clutch displacement.

5. Transmission according to claims 1 to 3, characterised in that a movement sensor (9) is provided as the transmitter (9).

6. Transmission according to one or more of claims 1 to 5, characterised in that, when the clutch pedal (8) is returned from the fully depressed position before completion of the gear change, the evaluation circuit (3) effects a fast gear change.

7. Transmission according to one or more of claims 1 to 6, characterised in that the evaluation circuit (3) causes the transmission to be returned to the neutral position at approximately 2/3 of the clutch displacement if the clutch (6) is engaged again before completion of the gear change.

8. Transmission according to one or more of claims 1 to 7, characterised in that, in the case of the selection of a gear change without simultaneous actuation of the clutch (6), the evaluation circuit (3) actuates a visual or acoustic warning device (11).

9. Transmission according to claim 8, characterised in that, when the clutch is subsequently actuated, the evaluation circuit (3) immediately engages the preselected gear and switches off the warning device (11).

10. Transmission according to one or more of claims 1 to 9, characterised in that a signal is given to the evaluation circuit (3) after an actuation movement of less than half the total displacement of the clutch, and the evaluation circuit (3) then immediately locates the slot for the newly selected gear.

**Revendications**

1. Boîte de vitesses à commande par force externe, comportant un verrou de changement, en particulier pour véhicules automobiles, dont le verrou contrôle la boîte de manière qu'un changement de vitesses ou de rapports soit seulement possible lorsque l'embrayage est débrayé, caractérisé en ce que :

a) un capteur électrique (9) est disposé sur l'embrayage (6, 10), la pédale de débrayage (8) ou un élément (12) de la tringlerie de commande de l'embrayage ;

b) le capteur (9) est connecté à un circuit d'exploitation électronique (3) qui commande la sélection et l'engagement des vitesses ;

c) le circuit d'exploitation (3) empêche l'engagement d'une nouvelle vitesse si l'embrayage (6) n'est pas débrayé ;

d) le circuit d'exploitation (3) produit l'exécution de fonctions partielles du changement de vitesses en réponse à des courses de commande de l'embrayage qui sont inférieures à la course de commande totale de l'embrayage et/ou des vitesses de commande de l'embrayage ;

et

e) le circuit d'exploitation (3) produit l'engagement complet d'une nouvelle vitesse lorsque l'embrayage est complètement débrayé.

2. Boîte selon la revendication 1, caractérisée en ce que le circuit d'exploitation (3) produit le dégagement de la vitesse utilisée jusqu'alors et la recherche du passage d'une nouvelle vitesse lorsqu'est atteinte une course de débrayage préfixée, laquelle est détectée par le capteur (9) et correspond à environ 2/3 de la course de débrayage totale.

3. Boîte selon la revendication 2, caractérisé en ce que le dégagement de la vitesse utilisée jusqu'alors et la recherche du passage d'une nouvelle vitesse, entre environ 2/3 et la course totale de débrayage, s'effectuent seulement si le circuit d'exploitation (3) constate que la vitesse de manœuvre pour le débrayage va dans le sens d'un débrayage complet.

4. Boîte selon une des revendications 1 à 3, caractérisée en ce que le capteur (9) est constitué par deux éléments de commutation, dont l'un est actionné à environ 2/3 et l'autre à la course totale de débrayage.

5. Boîte selon une des revendications 1 à 3, caractérisée en ce que le capteur (9) est constitué par un capteur de déplacement.

6. Boîte selon une ou plusieurs des revendications 1 à 5, caractérisée en ce que le circuit d'exploitation (3) produit une manœuvre rapide en cas de mouvement de retour de la pédale de débrayage (8), depuis la position complètement enfoncée de cette pédale, avant que le changement de vitesses ne soit terminé.

7. Boîte selon une ou plusieurs des revendications 1 à 6, caractérisée en ce que, en cas de réembrayage avant la fin du changement de vitesses, le circuit d'exploitation (3) produit, à une position correspondant environ à 2/3 de la course de débrayage, la manœuvre de retour de la boîte à la position neutre.

8. Boîte selon une ou plusieurs des revendications 1 à 7, caractérisée en ce que, en cas de sélection d'une vitesse sans manœuvre simultanée de l'embrayage (6), le circuit d'exploitation (3) actionne un dispositif avertisseur optique ou acoustique (11).

9. Boîte selon la revendication 8, caractérisée en ce que, si le débrayage est ensuite effectué, le circuit d'exploitation (3) produit immédiatement l'engagement de la vitesse présélectionnée et l'arrêt du dispositif avertisseur (11).

10. Boîte selon une ou plusieurs des revendications 1 à 9, caractérisée en ce que le circuit d'exploitation (3) délivre un signal dès avant que la moitié de la course totale de débrayage ait été couverte et que ce circuit (3) produit aussitôt après la recherche du passage de la nouvelle vitesse sélectionnée.